# EUROPEAN PATENT SPECIFICATION

(11) **EP 4 089 962 B1**
(45) Date of publication and mention of the grant of the patent: **08.05.2024**
(21) Application number: 21173081.7
(22) Date of filing: 10.05.2021
(51) Int. Cl.: H04L 41/142, H04L 41/147

(54) **NETWORK ANALYTICS COMPONENT AND METHOD FOR PROVIDING NETWORK ANALYTICS INFORMATION**
NETZWERKANALYSEKOMPONENTE UND VERFAHREN ZUR BEREITSTELLUNG VON NETZWERKANALYSEINFORMATIONEN
COMPOSANT D'ANALYSE DE RÉSEAU ET PROCÉDÉ POUR FOURNIR DES INFORMATIONS D'ANALYSE DE RÉSEAU

(43) Date of publication of application: 16.11.2022
(73) Proprietor: NTT DOCOMO, INC., Chiyoda-ku Tokyo 100-6150 (JP)
(72) Inventor: SAMA, Malla Reddy, 80687 Munich (DE); THAKOLSRI, Srisakul, 80687 Munich (DE); MINOKUCHI, Atsushi, 80687 Munich (DE)
(74) Representative: Viering, Jentschura & Partner mbB Patent- und Rechtsanwälte

(56) References cited:
- WO-A1-2021/066570
- "3rd Generation Partnership Project; Technical Specification Group Services and System Aspects; Architecture enhancements for 5G System (5GS) to support network data analytics services (Release 16)", 3GPP STANDARD; TECHNICAL SPECIFICATION; 3GPP TS 23.288, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.5.0, 3 June 2019 (2019-06-03), pages 1-52, XP051753921, [retrieved on 2019-06-03]

## Description

The present disclosure relates to network analytics components and methods for providing network analytics information.

In a communication network such as a 5G mobile communication network it is important to ensure that a certain service quality can be maintained. For this, network statistical analysis and prediction information which may be generated from information like load, resource usage, available components, state of components etc. may be monitored to be able to take measures, e.g. when overload is imminent, to avoid a drop of service quality, etc. In a communication network having a network slice architecture, like a 5G mobile communication system, this relates in particular to monitoring of network analysis and prediction information (also referred to as network analytics information) for individual network slice instances since, for example, individual network slice instances may become overloaded. Network analytics may also relate to single mobile terminals or group of mobile terminals and it may be possible to provide the network analytics (e.g. predictions) in a location-dependent manner (e.g. a prediction for the services used by a mobile when the mobile is at a certain location, e.g. in a mall). Thus, a higher accuracy of a prediction, for example, may be achieved than when network analytics information is provided in general (e.g. for all mobile terminals of a communication network). WO 2021/066570 A1 represents a relevant document in the art.

Efficient approaches for providing network analytic information with high accuracy, in particular considering mobile terminal location, are therefore desirable.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system, for example configured according to 5G (Fifth Generation) as specified by 3GPP (Third Generation Partnership Project).
- Figure 2: shows a network function (NF), acting as service consumer of a network analytics service provided by an NWDAF (Network Data Analytics Function).
- Figure 3: shows an LCS (Locations Services) architecture.
- Figure 4: shows a flow diagram illustrating a message flow for provision of network analytics information.
- Figure 5: illustrates analytic enhancement by collecting UE (User Equipment) location information.
- Figure 6: shows an NWDAF which collects location information from an LCS component and, in addition, additional location information from a location provider.
- Figure 7: shows a network analytics component of a communication network according to an embodiment.
- Figure 8: shows a flow diagram illustrating a method for performing communication network analytics.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention.

In the following, various examples will be described in more detail.

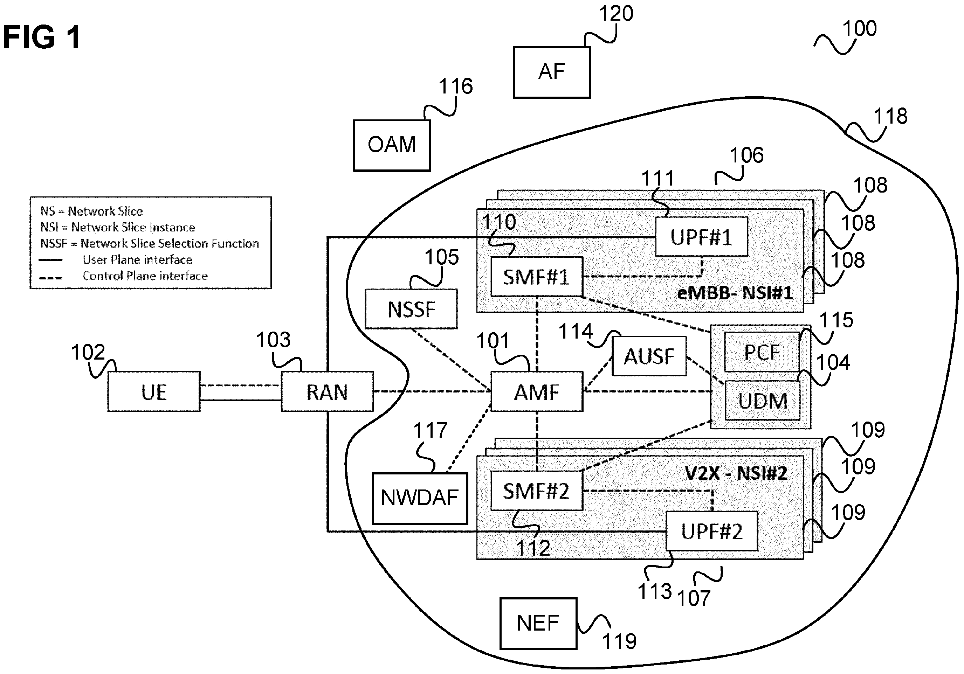

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), a nano equipment (NE), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like WiFi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple core network slices 106, 107 and for each core network slice 106, 107, the operator (also referred to MNO for Mobile Network Operator) may create multiple core network slice instances 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 118 form the network side of the mobile radio communication system, or, in other words, form the mobile radio communication network. The mobile radio communication network and the mobile terminals accessing the mobile radio communication network form, together, the mobile radio communication system.

Like the core network 118, the RAN 103 may also be sliced, i.e. include multiple RAN slices.

The mobile radio communication system 100 may further include an OAM (Operation, Administration and Maintenance) function (or entity) 116, e.g. implemented by one or more OAM servers which is connected to the RAN 103 and the core network 118 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, and the resource utilizations of different NFs which are related with the network slice instance.

The core network further comprises a Network Exposure Function (NEF) 119 and an Application Function (AF) 120.

The core network 118 further includes a Network Data Analytics Function (NWDAF) 117. The NWDAF is responsible for providing network analysis and/or prediction information upon request from network functions. For example, a network function may request specific analysis information on the load level of a particular network slice instance. Alternatively, the network function can use the subscribe service to ensure that it is notified by the NWDAF if the load level of a network slice instance changes or reaches a specific threshold. The NWDAF 117 may have an interface to various network functions on the mobile communication network side, e.g. to the AMF 101, the SMFs 110, 112 and the PCF 115. For simplicity, only the interface between the NWDAF 117 and the AMF 101 is depicted.

For example, NWDAF analytics should allow monitoring the number of UEs registered in a network slice instance and their Observed Service Experience. In addition to OAM performing SLA (service level agreement) assurance, 5GC NFs may take actions based on NWDAF slice QoE analytics to prevent further service experience degradation in the network slice instance.

The NSSF 105 or AMF 101 may for example determine when a load distribution decision is required to address an issue identified by processing the analytics result (i.e. network analysis and/or prediction information) provided by the NWDAF 117. For example, when a network slice instance is detected or forecast to experience service experience degradation, new UE registrations or PDU sessions may not be assigned to that network slice instance anymore by triggering a network slice load distribution mechanism. The NSSF 105, AMF 101 and/or OAM 116, for example, may also simultaneously subscribe to both slice service experience and slice load analytics from the NWDAF 117. One or multiple subscriptions to one or multiple S-NSSAI(s) and NSI(s) are possible.

The NWDAF 117 may provide slice load level information to an NF on a Network slice instance level. The NWDAF notifies slice specific network status analytics information (also referred to as network analysis and/or prediction information) to the NFs that are subscribed to it. For example, as network analysis and/or prediction information, the NWDAF 117 reports when the load level of the Network slice instance, indicated by the S-NSSAI and the associated NSI (if applicable) in the Analytics Filter, crosses the threshold provided in the analytics subscription; if no threshold is provided in the subscription, the reporting (Notify operation) is assumed to be periodic.

To generate the network analysis and/or prediction information, NWDAF 117 collects input data required (e.g. to derive slice service experience analytics), i.e. information for analysis of the state of the network slice instance. The NWDAF 117 may obtain such kind of information by subscribing to network functions to be informed accordingly.

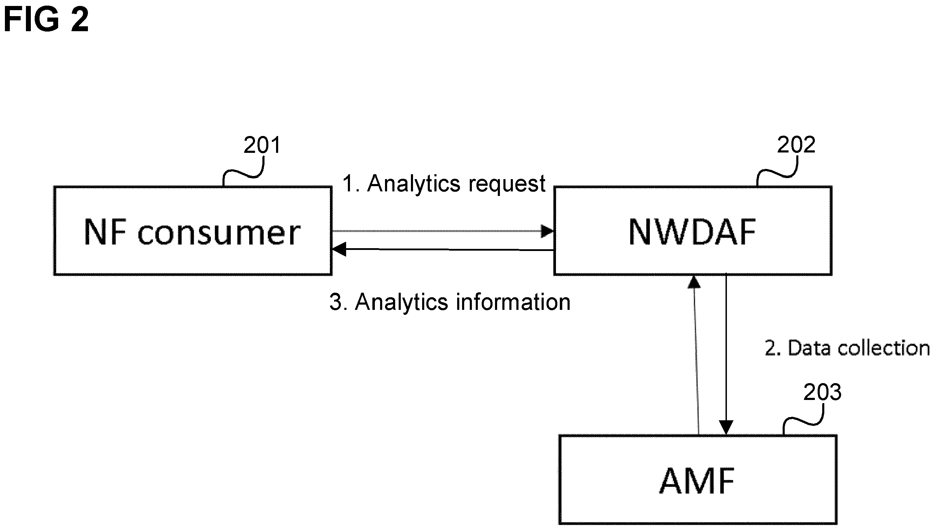

Figure 2 shows a network function (NF) acting as service consumer 201 of a network analytics service provided by an NWDAF 202.

The service consumer 201 may send a request for network analytics information to the NWDAF 202. In the request, the service consumer 201 may in particular include an Analytics ID to specify the type of network analytics information. Examples of Analytics IDs are UE communication, UE mobility, UE behaviour, user data congestion and Network performance, etc.

When the service consumer 201 sends a request for network analytics information to the NWDAF 202, the NWDAF 202 may collect data from a network function, such as an AMF 203, for providing the network analytics information. The NWDAF 202 then performs network analytics, i.e. determines the requested network analytics information, and reports the results to the NF consumer 201.

The NWDAF 202 may for example collect information about the tracking area or cell in which the UE is located from the AMF 203. For example, the NF consumer 201 requests analytic information related to a UE and includes that the analytic information should be determined on TA (tracking area) level or cell level (for example the mobility of the UE should be estimated for the specific radio cell the UE is in, i.e. for example based on the typical behaviour for that specific cell).

To respond to this request, the NWDAF 202 collects the UE's current location information (i.e. either TA level or cell level) from the AMF 203.

The AMF 203 is only able to provide a UE location report with TA level or cell level granularity, i.e. only has knowledge about the UE's location up to cell level.

However, there are use cases where network analytics with a finer granularity would be desirable, such as mobility on a finer level (e.g. between floors of a building), location-dependent sending of content, inference of behaviour based on visited places (such as restaurants), measurement of the number of viewers watching a certain outdoor advertisement or measurement of the number of visitors of a certain location which require a granularity of e.g. several meters.

Therefore, according to various embodiments, to be able to derive network analytics on a finer granularity, e.g. for a certain geographic location (e.g. terms of longitude, latitude and height (e.g. in meters)) or for a certain civic location (e.g. a certain address, i.e. building in a street), i.e., in general, an area, the NWDAF 202 collects UE information form a LCS (Location Services) component.

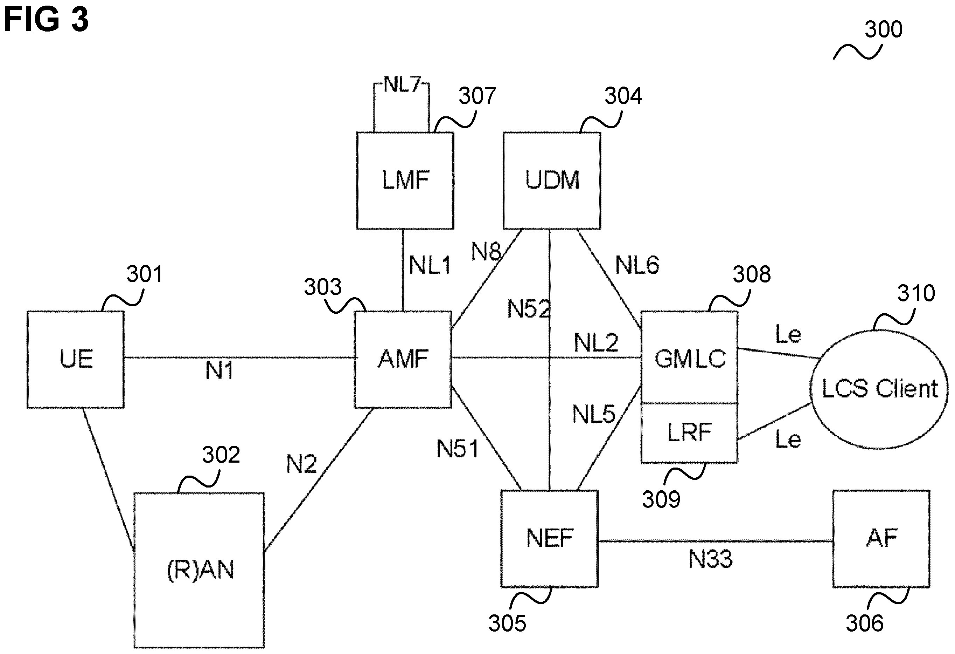

Figure 3 shows an LCS architecture 300.

In the LCS architecture 300, a UE 301, a RAN 302, an AMF 303, a UDM 304, a NEF 305 and an AF 306 as described with reference to figure 1 are shown.

As LCS components, the LCS architecture 300 comprises an LMF (Location Management Function) 307, an GMLC (Gateway Mobile Location Centre) 308 and an LRF (Location Retrieval Function) 309. Additionally, an LCS client (or multiple such clients) 310 is part of the LCS architecture 300.

3GPP defined the Location Service (LCS) architecture to provide the precise UE location information.

Location information comprises one or more of:
- Geographic Location
- Velocity (the combination of speed and direction of a Target UE)
- Civic Location (Dispatchable Location of a target UE in civic form is applicable to Emergency Services)
- Quality of Service information
   ∘ Horizontal Accuracy: location accuracies of between 25m and 200m can be provided
   ∘ Vertical Accuracy: vertical location of a UE in terms of either absolute height/depth or relative height/depth to local ground level

It should be noted that the LCS (i.e. the services provided by LMF 307, GMLC 308 and LRF 309) provides UE location information, but no analytics information (statistics and predictions).

Table 1 gives a list of LMF services and table 2 shows a list of GMLC services.

**Table 1**

| **Service Name** | **Service Operations** | **Operation Semantics** | **Example Consumer(s)** |
|---|---|---|---|
| Nlmf_Location | DetermineLocation | Request/Response | AMF |
| | EventNotify | Notify | GMLC |
| | CancelLocation | Request/Response | AMF |
| | LocationContextTransfer | Request/Response | LMF |
| Nlmf_Broadcast | CipheringKeyData | Notify | AMF |

**Table 2**

| **Service Name** | **Service Operations** | **Operation Semantics** | **Example Consumer(s)** |
|---|---|---|---|
| Ngmlc_Location | ProvideLocation | Request / Response | GMLC, NEF |
| | LocationUpdate | Request / Response | AMF, GMLC |
| | LocationUpdateNotify | Notify | NEF |
| | CancellLocation | Request / Response | GMLC, NEF |
| | EventNotify | Notify | GMLC, NEF |

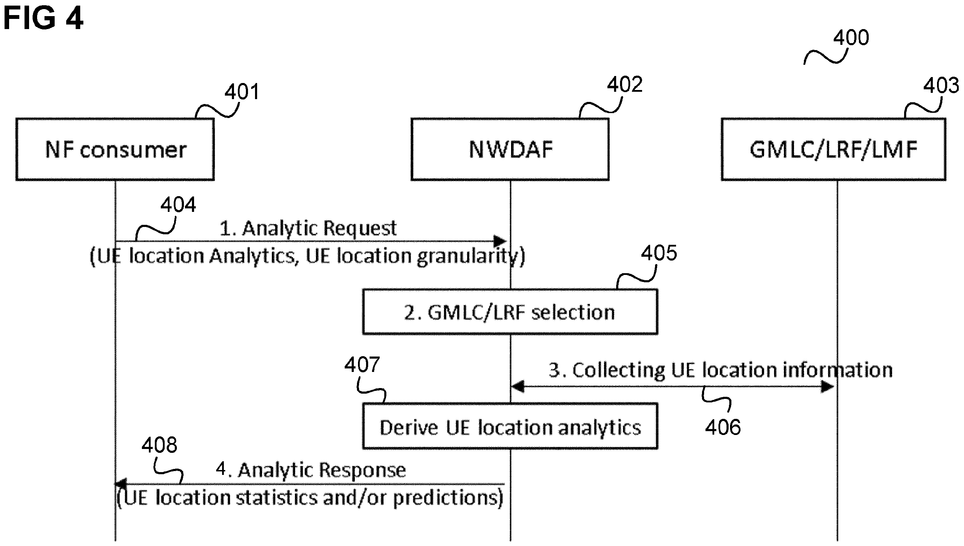

According to various embodiments, the NWDAF 202 acts as LCS client 310 (e.g. to the GMLC 310) to obtain UE location information. This is illustrated in figure 4.

Figure 4 shows a flow diagram 400 illustrating a message flow for provision of network analytics information.

An NF consumer 401, an NWDAF 402 and an LCS component 403 (GMI,C, LRF or LMF) are involved in the flow.

In 404, the NF consumer 401 sends a request for network analytics information to the NWDAF 402. The NF consumer is for example a 5GC NF or an AF 120 or OAM 116. According to an embodiment, it includes "UE location Analytics" as Analytics ID.

The NF consumer 401 for example includes the following input parameters into the request:
- UE location Analytics ID
- UE ID
- UE location granularity
- consumer information.

The location granularity defines the granularity at which the network analytics information should be determined, e.g. on building floor level, building level (civic location level), etc.

In response to receiving a request with the UE location Analytics ID, the NWDAF 402 selects the LCS component 403 based on its configuration or using an NRF (Network Repository Function).

In 406 the NWDAF 402 then collects the needed UE location information (e.g. the UE location on the level of the granularity specified in the request) from the selected LCS component 403. It may do this via a request or via a subscription to a location service (to be notified about a UE's location). It should be noted that the collection of location information may vary. For example, location information can be collected per UE or per UE group or per S-NSSAI (slice) (for example all UEs of a specific layer) or per DNN or one or more of their combinations thereof.

In 407, based on the collected location information, the NWDAF 402 determines the requested analytics information (e.g. UE location statistics and/or predictions) and provides it to the consumer in 408.

In the example of figure 4, the NWDAF 402 consults the LCS component 403 in response to having received a request specifying the UE location Analytics ID and a specification of a corresponding granularity. Alternatively, the NWDAF 402 may decide by itself (i.e. also in case that the request does not include a location information and a specification of a corresponding granularity) to consult the LCS component 403 to derive requested network analytics information, for example to achieve an enhancement of the analytics based on (more) precise information about UE location.

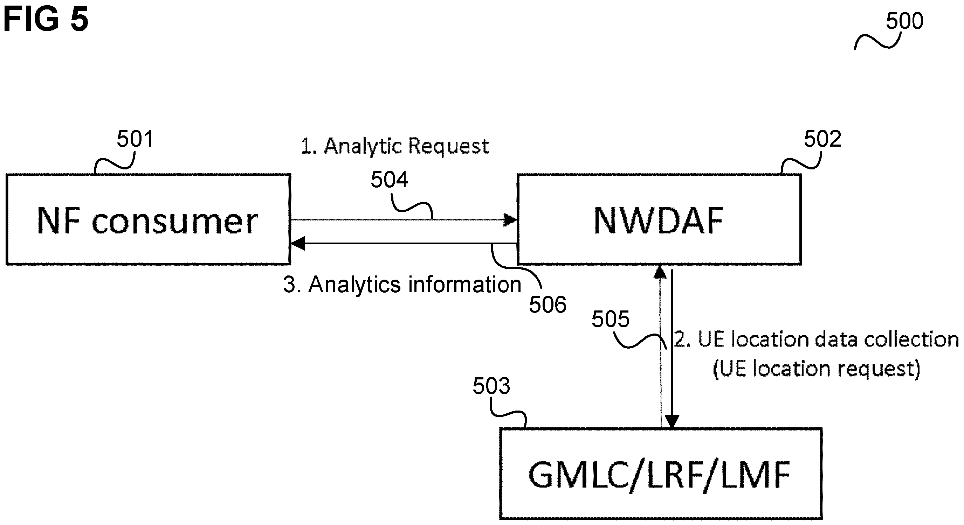

Figure 5 illustrates analytic enhancement by collecting UE location information.

In this example, an NF consumer 401 (5GC NF or AF or OAM) requests analytics information from an NWDAF in 504 (e.g. using any kind of Analytics ID such as UE communication, UE mobility, UE behaviour, User data congestion, UE location and Network performance).

For example, the NF consumer 401 sends a request including as input parameters
- Analytic ID
- UE ID
- consumer information.

The NWDAF 502 may then judge based on the nature of Analytics that having UE location information may improve the quality of the analytics and therefore decides to collect UE location information. It may also decide based on other factors e.g. like the application type (e.g. the application for which network analytics should be performed), operator policy, local configuration etc.

Accordingly, the NWDAF 502 selects the LCS component 503 based on its configuration or using an NRF (Network Repository Function) and, in 505 collects the UE location information (that it has judged to improve the quality) from the selected LCS component 503. It may do this via a request or via a subscription to a location service (to be notified about a UE's location). It should be noted that the collection of location information may vary. For example, location information can be collected per UE or per UE group or per S-NSSAI (slice) (for example all UEs of a specific layer) or per DNN or one or more of their combinations thereof.

The NWDAF 502 may additionally collect other data for performing the network analytics, e.g. data from an AMF as described with reference to figure 2.

Based on the collected data, in particular the collected UE location information, the NWDAF 502 determines the analytics information and provides it to the NF consumer 501 in 506.

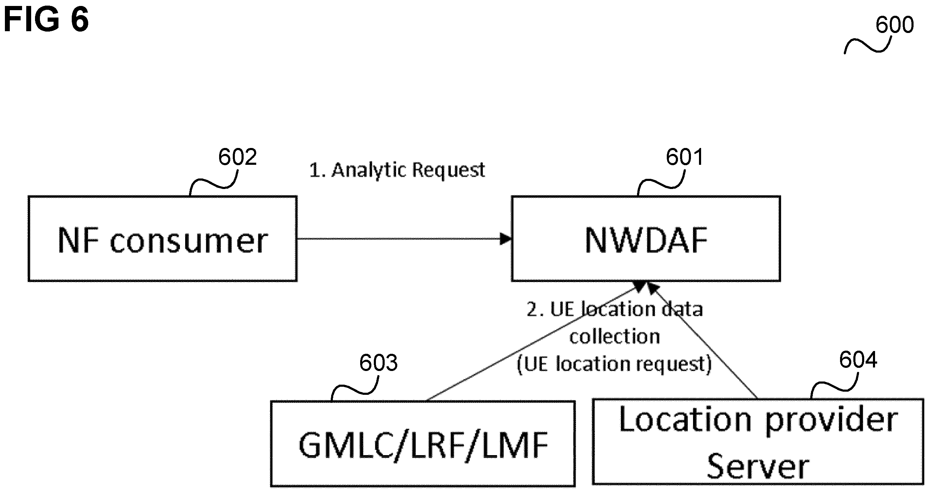

The NWDAF 502 may also collect additional location information from another source of location information, i.e. in general a location provider, other than the LCS components. This is illustrated in figure 6.

Figure 6 shows an NWDAF 601 which collects, for serving a request for network analytics information from an NF consumer 602, location information from an LCS component 603 and, in addition, additional location information from a location provider 604 (other than an LCS component). NWDAF 601 determines (e.g. based on local policy and/or nature of analytics) whether to collect location information either from a LCS component(s) 603 or location provider 604 or both.

The NWDAF 601 may collect the location information and/or the additional location information in response to the request specifying that this should be done or by its own decision (as for example explained with reference to figure 5)

The location provider 604 is for example an application function (e.g. server) or a location management server which gets UE (device) location information from one or more UEs (devices) via the user plane. This location provider 604 exposes an interface (Application Programming Interface (API)) to provide the location information of one or more UEs (devices). The NWDAF receives the location information directly from the location provider or via Network Exposure Function (NEF) 119. The location provider information is either configured in the NWDAF (as local configuration) or selects via a NRF (e.g. information configured by OAM in the NRF).

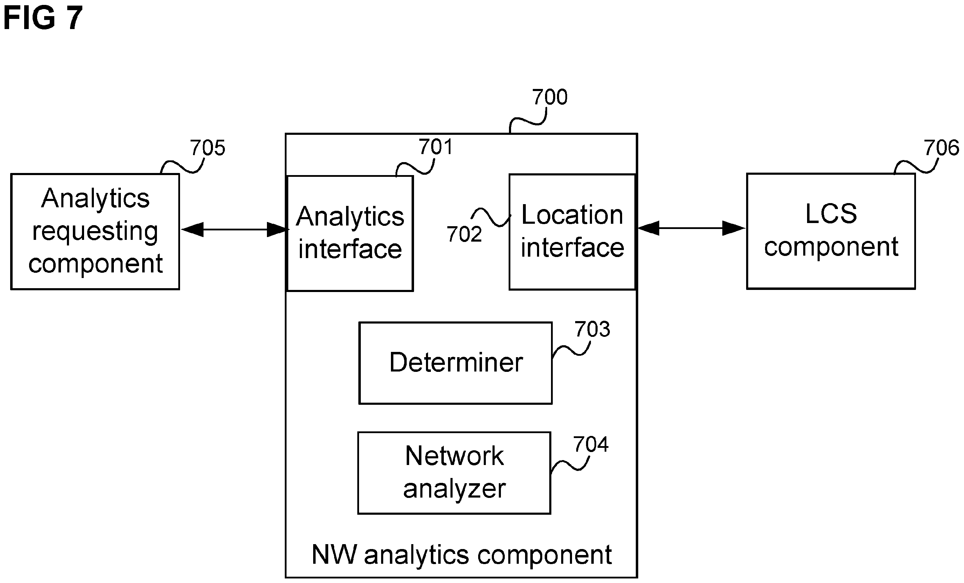

In summary, according to various embodiments, a network analytics component is provided as illustrated in figure 7.

Figure 7 shows a network analytics component 700 of a communication network according to an embodiment.

The network analytics component 700 comprises an analytics interface 701 configured to receive a request for network analytics information from an analytics requesting component 705.

The network analytics component 700 further comprises a determiner 702 configured to determine whether to collect location information of one or more mobile terminals from a Location Services component for generating the network analytics information. It is possible that the determiner 702 is a standalone function or service. In that case, the network analyzer 704 communicates with determiner 702 to determine the location information of one or more mobile terminals. In particular, the network analytics component 700 may be distributed and may comprise, for example, an NWDAF and a determiner (which may possibly be implemented in another server or device than the NWDAF). The network analytics component 700 may thus comprise a determiner and a network analyzer (which may correspond, for example, to the NWDAF functionality) which are connected by an interface (and may or may not be co-located). The determiner may also perform the determining based on an instruction from a further component.

Further, the network analytics component 700 comprises a location interface 703 configured to, if the determiner 702 has determined to collect location information of the one or more mobile terminals from a Location Services component for generating the network analytics information, select a Location Services component 706 and to collect location information of the one or more mobile terminals from the selected Location Services component 706.

The network analytics component 700 further comprises a network analyzer 704 configured to, if the determiner 702 has determined to collect location information of the one or more mobile terminals from a Location Services component for generating the network analytics information, generate the requested network analytics information using the collected location information and to provide the generated network analytics information to the requesting component via the analytics interface 701.

According to various embodiments, in other words, a network analytics component retrieves location information from an LCS component (e.g. for a set of one or more mobile terminals) if it decides that it is required or desirable (e.g. according to a quality criterion which may for example specify a desired quality of the network analytics information) to generate network analytics information for the set of one or more mobile terminals. The network analytics component may select a suitable LCS component for this. In addition, the collection of location information can be per UE or per UE group or per S-NSSAI (slice) (for example all UEs of a specific area, i.e. for example geographic area or civic) or per DNN or one or more of their combinations thereof.

It should be noted that the selection may be according to a configuration of the location interface. The LCS component to be selected may be fixed but the location interface may also be configured to select the LCS component depending on the location information (and thus the location service) which is needed.

The approach of figure 5 in particular allows generating network analytics information with a finer granularity than tracking area level or cell level, i.e. the network analytics information that is generated is specific for a geographic area that is smaller than a radio cell or a tracking area (e.g. geographic location or civic location) or also for a certain velocity of the one or more mobile terminals (i.e. the location information may also include mobile velocity).

An Analytics ID may be introduced to allow indication (in the request) that the location information should be used in the generation of the network analytics information.

The network analytics component may also select a machine learning (ML) model it uses for generating the network analytics information depending on whether LCS location information (i.e. location information collected from an LCS component) should be used. This may for example be an ML model which performs an inference process based on UE location.

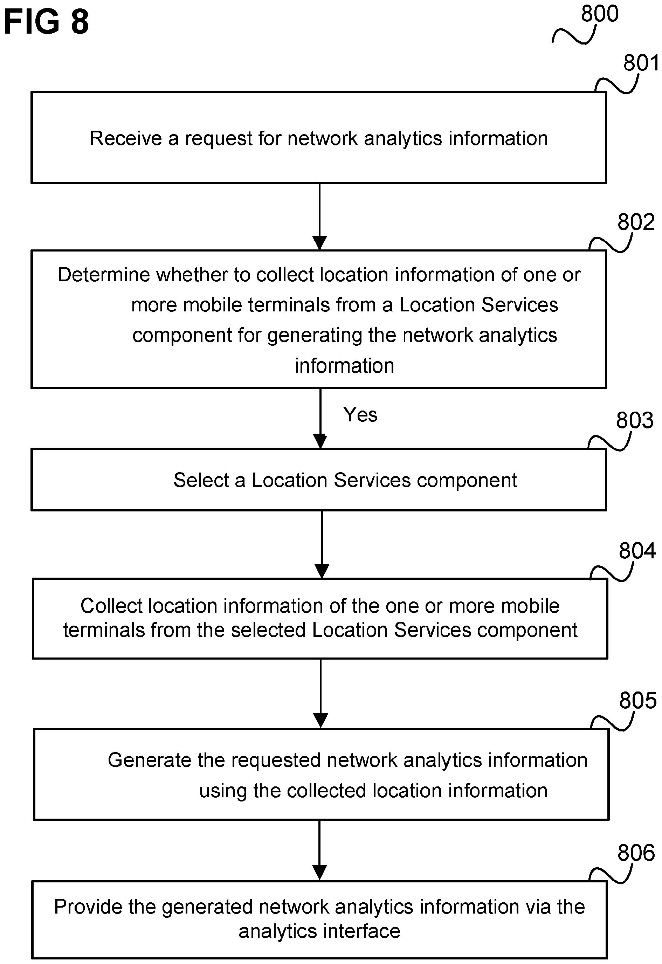

Figure 8 shows a flow diagram 800 illustrating a method for performing communication network analytics.

In 801, a request for network analytics information is received from a requesting component.

In 802, it is determined whether to collect location information of one or more mobile terminals from a Location Services component for generating the network analytics information.

If the determiner has determined to collect location information of the one or more mobile terminals from a Location Services component for generating the network analytics information,
a Location Services component is selected in 803,
location information of the one or more mobile terminals is collected from the selected Location Services component in 804,
the requested network analytics information is generated using the collected location information in 805 and
the generated network analytics information is provided to the requesting component via the analytics interface in 806.

The method may be performed and the components of the network analytics component may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the scope as defined by the appended claims. The scope is thus indicated by the appended claims.

## Claims

1. A network analytics component (402, 502, 601, 700) of a communication network comprising:
An analytics interface (701) configured to receive a request for network analytics information from an analytics requesting component (401, 501, 602, 705);
a determiner (703) configured to determine to collect location information of one or more mobile terminals from a Location Services component (403, 503, 603, 706) for generating the network analytics information, wherein the determiner (703) is configured to determine to collect location information of the one or more mobile terminals from the Location Services component (403, 503, 603, 706) for generating the network analytics information if the request includes an indication that the network analytics information should be generated with a finer granularity than tracking area level and radio cell level;
a location interface (702) configured to, if the determiner (703) has determined to collect location information of the one or more mobile terminals from a Location Services component (403, 503, 603, 706) for generating the network analytics information, select a Location Services component (403, 503, 603, 706) and to collect location information of the one or more mobile terminals from the selected Location Services component (403, 503, 603, 706); and
a network analyzer (704) configured to, if the determiner (703) has determined to collect location information of the one or more mobile terminals from a Location Services component (403, 503, 603, 706) for generating the network analytics information, generate the requested network analytics information using the collected location information and to provide the generated network analytics information to the requesting component (401, 501, 602, 705) via the analytics interface (701).

2. The network analytics component (402, 502, 601, 700) of claim 1, wherein the determiner (703) is configured to determine to collect location information of the one or more mobile terminals from a Location Services component (403, 503, 603, 706) for generating the network analytics information if the request includes an indication that the network analytics information should be generated using location information of the one or more mobile terminals from a Location Services component (403, 503, 603, 706).

3. The network analytics component (402, 502, 601, 700) of claim 2, wherein the indication is an Analytics ID and/or an indication in the analytic request information and/or an indication of an application, in particular an application type or an application identification.

4. The network analytics component (402, 502, 601, 700) of claim 2, wherein the indication is an indication of the granularity.

5. The network analytics component (402, 502, 601, 700) of any one of claims 1 to 4, wherein the determiner (703) is configured to determine to collect location information of the one or more mobile terminals from a Location Services component (403, 503, 603, 706) for generating the network analytics information if it determines that the network analytics information generated without location information of the one or more mobile terminals from a Location Services component (403, 503, 603, 706) violates a predetermined quality criterion and the network analytics information generated with the location information of the one or more mobile terminals from a Location Services component (403, 503, 603, 706) fulfils the predetermined quality criterion.

6. The network analytics component (402, 502, 601, 700) of any one of claims 1 to 5, wherein the determiner (703) is configured to determine whether accuracy of the network analytics information could be improved by a predetermined margin by generating the network analytics information using location information of the one or more terminals from a Location Services component (403, 503, 603, 706); and determine to collect location information of the one or more mobile terminals from a Location Services component (403, 503, 603, 706) for generating the network analytics information if it has determined that accuracy of the network analytics information could be improved by a predetermined margin by generating the network analytics information using location information of the one or more terminals from a Location Services component (403, 503, 603, 706).

7. The network analytics component (402, 502, 601, 700) of any one of claims 1 to 6, wherein the determiner (703) is configured to determine whether to collect location information of the one or more mobile terminals from a Location Services component (403, 503, 603, 706) for generating the network analytics information in accordance with an operator policy.

8. The network analytics component (402, 502, 601, 700) of any one of claims 1 to 7, wherein the determiner (703) is configured to determine to collect location information of the one or more mobile terminals from a Location Services component (403, 503, 603, 706) for generating the network analytics information if the operator policy specifies to collect location information of the one or more mobile terminals from a Location Services component (403, 503, 603, 706) for generating the network analytics information even if the request does not include an indication that the network analytics information should be generated using location information of the one or more mobile terminals from a Location Services component (403, 503, 603, 706).

9. The network analytics component (402, 502, 601, 700) of any one of claims 1 to 8, wherein the network analytics information specifies a prediction and/or statistics of at least one of the mobility, experienced communication performance or communication behaviour of mobile terminals for an area and wherein the network analyzer (704) is configured to generate the prediction and/or statistics for the area in which the one or more mobile terminals are located.

10. The network analytics component (402, 502, 601, 700) of claim 9, wherein the area is smaller than the tracking area and the radio cell in which the one or more mobile terminals are located.

11. The network analytics component (402, 502, 601, 700) of any one of claims 1 to 10, wherein the Location Services component (403, 503, 603, 706) is a Gateway Mobile Location Centre, a Location Management Function or a Location Retrieval Function.

12. The network analytics component (402, 502, 601, 700) of any one of claims 1 to 11, wherein the location information is location information of a group of mobile terminals comprising all mobile terminals served by one or more predetermined network slices, comprising all mobile terminals using one or more predetermined applications or a combination thereof.

13. The network analytics component (402, 502, 601, 700) of any one of claims 1 to 12, wherein the location interface (702) configured to collect additional location information of the one or more mobile terminals from a location information provider and the network analyzer (704) is configured to generate the requested network analytics information using the collected location information and/or the collected additional location information.

14. A method for providing network analytics information comprising:
receiving a request for network analytics information from a requesting component (401, 501, 602, 705);
determining to collect location information of one or more mobile terminals from a Location Services component (403, 503, 603, 706) for generating the network analytics information, wherein it is determined to collect location information of the one or more mobile terminals from the Location Services component (403, 503, 603, 706) for generating the network analytics information if the request includes an indication that the network analytics information should be generated with a finer granularity than tracking area level and radio cell level;
when the determiner (703) has determined to collect location information of the one or more mobile terminals from a Location Services component (403, 503, 603, 706) for generating the network analytics information,
selecting a Location Services component (403, 503, 603, 706);
collecting location information of the one or more mobile terminals from the selected Location Services component (403, 503, 603, 706);
generating the requested network analytics information using the collected location information; and
providing the generated network analytics information to the requesting component (401, 501, 602, 705) via the analytics interface (701).

## Patentansprüche

1. Eine Netzwerkanalysekomponente (402, 502, 601, 700) eines Kommunikationsnetzwerkes, aufweisend:
Eine Analyseschnittstelle (701), eingerichtet zum Empfangen einer Anforderung nach Netzwerkanalyseinformationen von einer Analyseanforderungskomponente (401, 501, 602, 705);
eine Ermittlungseinrichtung (703), die eingerichtet ist, um zu bestimmen, Standortinformationen eines oder mehrerer mobiler Endgeräte von einer Standortdienstkomponente (403, 503, 603, 706) zu sammeln, um die Netzwerkanalyseinformationen zu erzeugen, wobei die Ermittlungseinrichtung (703) eingerichtet ist, um zu bestimmen, Standortinformationen des einen oder der mehreren mobilen Endgeräte von der Standortdienstkomponente (403, 503, 603, 706) zu sammeln, um die Netzwerkanalyseinformationen zu erzeugen, wenn die Anforderung eine Angabe enthält, dass die Netzwerkanalyseinformationen mit einer feineren Granularität als der Ebene des Verfolgungsgebiets und der Funkzellenebene erzeugt werden sollten;
eine Standortschnittstelle (702), die eingerichtet ist, um, wenn die Ermittlungseinrichtung (703) bestimmt hat, Standortinformationen des einen oder der mehreren mobilen Endgeräte von einer Standortdienstkomponente ( 403, 503, 603, 706) zum Erzeugen der Netzwerkanalyseinformationen zu sammeln, eine Standortdienstkomponente (403, 503, 603, 706) auszuwählen und Standortinformationen des einen oder der mehreren mobilen Endgeräte von der ausgewählten Standortdienstkomponente (403, 503, 603, 706) zu sammeln; und
einen Netzwerkanalysator (704), der eingerichtet ist, um, wenn die Ermittlungseinrichtung (703) bestimmt hat, Standortinformationen des einen oder der mehreren mobilen Endgeräte von einer Standortdienstkomponente (403, 503, 603, 706) zum Erzeugen der Netzwerkanalyseinformationen zu sammeln, die angeforderten Netzwerkanalyseinformationen unter Verwendung der gesammelten Standortinformationen zu erzeugen und die erzeugten Netzwerkanalyseinformationen über die Analyseschnittstelle (701) an die anfordernde Komponente (401, 501, 602, 705) zu liefern.

2. Die Netzwerkanalysekomponente (402, 502, 601, 700) nach Anspruch 1,
wobei die Ermittlungseinrichtung (703) eingerichtet ist, um zu bestimmen, Standortinformationen des einen oder der mehreren mobilen Endgeräte von einer Standortdienstkomponente (403, 503, 603, 706) zu sammeln, um die Netzwerkanalyseinformationen zu erzeugen, wenn die Anforderung eine Angabe enthält, dass die Netzwerkanalyseinformationen unter Verwendung von Standortinformationen des einen oder der mehreren mobilen Endgeräte von einer Standortdienstkomponente (403, 503, 603, 706) erzeugt werden sollten.

3. Die Netzwerkanalysekomponente (402, 502, 601, 700) nach Anspruch 2,
wobei es sich bei der Angabe um eine Analyse-ID und/oder eine Angabe in der Analyseanforderungsinformation und/oder eine Angabe einer Anwendung, insbesondere eines Anwendungstyps oder einer Anwendungskennung, handelt.

4. Die Netzwerkanalysekomponente (402, 502, 601, 700) nach Anspruch 2,
wobei die Angabe eine Angabe der Granularität ist.

5. Die Netzwerkanalysekomponente (402, 502, 601, 700) nach einem der Ansprüche 1 bis 4,
wobei die Ermittlungseinrichtung (703) eingerichtet ist, um zu bestimmen, Standortinformationen des einen oder der mehreren mobilen Endgeräte von einer Standortdienstkomponente ( 403, 503, 603, 706) zum Erzeugen der Netzwerkanalyseinformationen zu sammeln, wenn sie bestimmt, dass die Netzwerkanalyseinformationen, die ohne Standortinformationen des einen oder der mehreren mobilen Endgeräte von einer Standortdienstkomponente ( 403, 503, 603, 706) erzeugt wurde, ein vorgegebenes Qualitätskriterium verletzt und die mit den Standortinformationen des einen oder der mehreren mobilen Endgeräte von einer Standortdienstkomponente ( 403, 503, 603, 706) erzeugten Netzwerkanalyseinformationen das vorgegebene Qualitätskriterium erfüllen.

6. Die Netzwerkanalysekomponente (402, 502, 601, 700) nach einem der Ansprüche 1 bis 5,
wobei die Ermittlungseinrichtung (703) eingerichtet ist, um zu bestimmen, ob die Genauigkeit der Netzwerkanalyseinformationen um eine vorbestimmte Spielraum verbessert werden könnte, indem die Netzwerkanalyseinformationen unter Verwendung von Standortinformationen des einen oder der mehreren Endgeräte von einer Standortdienstkomponente (403, 503, 603, 706) erzeugt werden; und zu bestimmen, Standortinformationen des einen oder der mehreren mobilen Endgeräte von einer Standortdienstkomponente (403, 503, 603, 706) zu sammeln, um die Netzwerkanalyseinformationen zu erzeugen, wenn es bestimmt hat, dass die Genauigkeit der Netzwerkanalyseinformationen um einen vorbestimmten Spielraum verbessert werden könnte, indem die Netzwerkanalyseinformationen unter Verwendung von Standortinformationen des einen oder der mehreren Endgeräte von einer Standortdienstkomponente (403, 503, 603, 706) erzeugt werden.

7. Die Netzwerkanalysekomponente (402, 502, 601, 700) nach einem der Ansprüche 1 bis 6,
wobei die Ermittlungseinrichtung (703) eingerichtet ist, um zu bestimmen, ob Standortinformationen des einen oder der mehreren mobilen Endgeräte von einer Standortdienstkomponente ( 403, 503, 603, 706) gesammelt werden sollen, um die Netzwerkanalyseinformationen gemäß einer Betreiberrichtlinie zu erzeugen.

8. Die Netzwerkanalysekomponente (402, 502, 601, 700) nach einem der Ansprüche 1 bis 7,
wobei die Ermittlungseinrichtung (703) eingerichtet ist, um zu bestimmen, Standortinformationen des einen oder der mehreren mobilen Endgeräte von einer Standortdienstkomponente (403, 503, 603, 706) zum Erzeugen der Netzwerkanalyseinformationen zu sammeln, wenn die Betreiberrichtlinie angibt, Standortinformationen des einen oder der mehreren mobilen Endgeräte von einer Standortdienstkomponente (403, 503, 603, 706) zum Erzeugen der Netzwerkanalyseinformationen zu sammeln, selbst wenn die Anforderung keine Angabe enthält, dass die Netzwerkanalyseinformationen unter Verwendung von Standortinformationen des einen oder der mehreren mobilen Endgeräte von einer Standortdienstkomponente (403, 503, 603, 706) erzeugt werden sollten.

9. Die Netzwerkanalysekomponente (402, 502, 601, 700) nach einem der Ansprüche 1 bis 8,
wobei die Netzwerkanalyseinformationen eine Vorhersage und/oder Statistiken von mindestens einem von der Mobilität, der erfahrenen Kommunikationsleistung oder dem Kommunikationsverhalten von mobilen Endgeräten für ein Gebiet spezifizieren und wobei der Netzwerkanalysator (704) eingerichtet ist, um die Vorhersage und/oder die Statistiken für das Gebiet zu erzeugen, in dem sich das eine oder die mehreren mobilen Endgeräte befinden.

10. Die Netzwerkanalysekomponente (402, 502, 601, 700) nach Anspruch 9,
wobei das Gebiet kleiner ist als das Ortungsgebiet und die Funkzelle, in der sich das eine oder die mehreren mobilen Endgeräte befinden.

11. Die Netzwerkanalysekomponente (402, 502, 601, 700) nach einem der Ansprüche 1 bis 10,
wobei die Standortdienstkomponente ( 403, 503, 603, 706) ein Gateway Mobile Location Centre, eine Standortmanagementfunktion oder eine Standortabfragefunktion ist.

12. Die Netzwerkanalysekomponente (402, 502, 601, 700) nach einem der Ansprüche 1 bis 11,
wobei die Standortinformationen Standortinformationen einer Gruppe mobiler Endgeräte sind, die alle mobilen Endgeräte aufweisen, die von einem oder mehreren vorbestimmten Netzwerk-Slices bedient werden, die alle mobilen Endgeräte aufweisen, die eine oder mehrere vorbestimmte Anwendungen oder eine Kombination davon verwenden.

13. Die Netzwerkanalysekomponente (402, 502, 601, 700) nach einem der Ansprüche 1 bis 12,
wobei die Standortschnittstelle (702) eingerichtet ist, um zusätzliche Standortinformationen des einen oder der mehreren mobilen Endgeräte von einem Anbieter von Standortinformationen zu sammeln, und der Netzwerkanalysator (704) eingerichtet ist, um die angeforderten Netzwerkanalyseinformationen unter Verwendung der gesammelten Standortinformationen und/oder der gesammelten zusätzlichen Standortinformationen zu erzeugen.

14. Ein Verfahren zur Bereitstellung von Netzwerkanalyseinformationen, aufweisend:
Empfangen einer Anforderung von Netzwerkanalyseinformationen von einer anfordernden Komponente (401, 501, 602, 705);
Bestimmen, Standortinformationen eines oder mehrerer mobiler Endgeräte von einer Standortdienstkomponente ( 403, 503, 603, 706) zu sammeln, um die Netzwerkanalyseinformationen zu erzeugen, wobei bestimmt wird, Standortinformationen des einen oder der mehreren mobilen Endgeräte von der Standortdienstkomponente ( 403, 503, 603, 706) zu sammeln, um die Netzwerkanalyseinformationen zu erzeugen, wenn die Anfrage eine Angabe enthält, dass die Netzwerkanalyseinformationen mit einer feineren Granularität als der Ebene des Verfolgungsgebiets und der Funkzellenebene erzeugt werden sollten;
wenn die Ermittlungseinrichtung (703) bestimmt hat, Standortinformationen des einen oder der mehreren mobilen Endgeräte von einer Standortdienstkomponente ( 403, 503, 603, 706) zu sammeln, um die Netzwerkanalyseinformationen zu erzeugen, Auswählen einer Standortdienstkomponente ( 403, 503, 603, 706);
Sammeln von Standortinformationen des einen oder der mehreren mobilen Endgeräte von der ausgewählten Standortdienstkomponente (403, 503, 603, 706);
Erzeugen der angeforderten Netzwerkanalyseinformationen unter Verwendung der gesammelten Standortinformationen; und
Bereitstellen der erzeugten Netzwerkanalyseinformationen an die anfordernde Komponente (401, 501, 602, 705) mittels der Analyseschnittstelle (701).

## Revendications

1. Composant d'analyse de réseau (402, 502, 601, 700) d'un réseau de communication comprenant :
une interface d'analyse (701) configurée pour recevoir une demande d'informations d'analyse de réseau à partir d'un composant de demande d'analyse (401, 501, 602, 705) ;
un déterminant (703) configuré pour déterminer de collecter des informations de localisation d'un ou plusieurs terminaux mobiles à partir d'un composant de services de localisation (403, 503, 603, 706) pour générer les informations d'analyse de réseau, le déterminant (703) étant configuré pour déterminer de collecter des informations de localisation dudit un ou desdits plusieurs terminaux mobiles à partir du composant de services de localisation (403, 503, 603, 706) pour générer les informations d'analyse de réseau si la demande comprend une indication selon laquelle les informations d'analyse de réseau doivent être générées avec une granularité plus fine que le niveau de la zone de suivi et le niveau de la cellule radio ;
une interface de localisation (702) configurée pour sélectionner un composant de services de localisation (403, 503, 603, 706) et pour collecter des informations de localisation dudit un ou desdits plusieurs terminaux mobiles à partir du composant de services de localisation sélectionné (403, 503, 603, 706), si le déterminant (703) a déterminé de collecter des informations de localisation dudit un ou desdits plusieurs terminaux mobiles à partir d'un composant de services de localisation (403, 503, 603, 706) pour générer les informations d'analyse de réseau ; et
un analyseur de réseau (704) configuré pour, si le déterminant (703) a déterminé de collecter des informations de localisation dudit un ou desdits plusieurs terminaux mobiles à partir d'un composant de services de localisation (403, 503, 603, 706) pour générer les informations d'analyse de réseau, générer les informations d'analyse de réseau demandées en utilisant les informations de localisation collectées et pour fournir les informations d'analyse de réseau générées au composant demandeur (401, 501, 602, 705) via l'interface d'analyse (701).

2. Composant d'analyse de réseau (402, 502, 601, 700) selon la revendication 1, dans lequel le déterminant (703) est configuré pour déterminer de collecter des informations de localisation dudit un ou desdits plusieurs terminaux mobiles à partir d'un composant de services de localisation (403, 503, 603, 706) pour générer les informations d'analyse de réseau si la demande comprend une indication selon laquelle les informations d'analyse de réseau doivent être générées en utilisant des informations de localisation dudit un ou desdits plusieurs terminaux mobiles à partir d'un composant de services de localisation (403, 503, 603, 706).

3. Composant d'analyse de réseau (402, 502, 601, 700) selon la revendication 2, dans lequel l'indication est un identifiant d'analyse et/ou une indication dans les informations de demande analytique et/ou une indication d'une application, en particulier un type d'application ou une identification d'application.

4. Composant d'analyse de réseau (402, 502, 601, 700) selon la revendication 2, dans lequel l'indication est une indication de la granularité.

5. Composant d'analyse de réseau (402, 502, 601, 700) selon l'une quelconque des revendications 1 à 4, dans lequel le déterminant (703) est configuré pour déterminer de collecter des informations de localisation dudit un ou desdits plusieurs terminaux mobiles à partir d'un composant de services de localisation (403, 503, 603, 706) pour générer les informations d'analyse de réseau s'il détermine que les informations d'analyse de réseau générées sans les informations de localisation dudit un ou desdits plusieurs terminaux mobiles à partir d'un composant de services de localisation (403, 503, 603, 706) violent un critère de qualité prédéterminé et que les informations d'analyse de réseau générées avec les informations de localisation dudit un ou desdits plusieurs terminaux mobiles à partir d'un composant de services de localisation (403, 503, 603, 706) satisfont au critère de qualité prédéterminé.

6. Composant d'analyse de réseau (402, 502, 601, 700) selon l'une quelconque des revendications 1 à 5, dans lequel le déterminant (703) est configuré pour déterminer si une précision des informations d'analyse de réseau pourrait être améliorée d'une marge prédéterminée en générant les informations d'analyse de réseau en utilisant des informations de localisation dudit un ou desdits plusieurs terminaux à partir d'un composant de services de localisation (403, 503, 603, 706) ; et déterminer de collecter des informations de localisation dudit un ou desdits plusieurs terminaux mobiles à partir d'un composant de services de localisation (403, 503, 603, 706) pour générer les informations d'analyse de réseau s'il a déterminé que la précision des informations d'analyse de réseau pouvait être améliorée d'une marge prédéterminée en générant les informations d'analyse de réseau en utilisant des informations de localisation dudit un ou desdits plusieurs terminaux à partir d'un composant de services de localisation (403, 503, 603, 706).

7. Composant d'analyse de réseau (402, 502, 601, 700) selon l'une quelconque des revendications 1 à 6, dans lequel le déterminant (703) est configuré pour déterminer s'il faut collecter des informations de localisation dudit un ou desdits plusieurs terminaux mobiles à partir d'un composant de services de localisation (403, 503, 603, 706) pour générer les informations d'analyse de réseau conformément à une politique d'opérateur.

8. Composant d'analyse de réseau (402, 502, 601, 700) selon l'une quelconque des revendications 1 à 7, dans lequel le déterminant (703) est configuré pour déterminer de collecter des informations de localisation dudit un ou desdits plusieurs terminaux mobiles à partir d'un composant de services de localisation (403, 503, 603, 706) pour générer les informations d'analyse de réseau si la politique d'opérateur spécifie de collecter des informations de localisation dudit un ou desdits plusieurs terminaux mobiles à partir d'un composant de services de localisation (403, 503, 603, 706) pour générer les informations d'analyse de réseau, même si la demande ne contient pas d'indication selon laquelle les informations d'analyse de réseau doivent être générées en utilisant des informations de localisation dudit un ou desdits plusieurs terminaux mobiles à partir d'un composant de services de localisation (403, 503, 603, 706).

9. Composant d'analyse de réseau (402, 502, 601, 700) selon l'une quelconque des revendications 1 à 8, dans lequel les informations d'analyse de réseau spécifient une prédiction et/ou des statistiques d'au moins un parmi la mobilité, la performance de communication expérimentée ou le comportement de communication de terminaux mobiles pour une zone et dans lequel l'analyseur de réseau (704) est configuré pour générer la prédiction et/ou les statistiques pour la zone dans laquelle ledit un ou lesdits plusieurs terminaux mobiles sont situés.

10. Composant d'analyse de réseau (402, 502, 601, 700) selon la revendication 9, dans lequel la zone est plus petite que la zone de suivi et la cellule radio dans laquelle se trouvent ledit un ou lesdits plusieurs terminaux mobiles.

11. Composant d'analyse de réseau (402, 502, 601, 700) selon l'une quelconque des revendications 1 à 10, dans lequel le composant de services de localisation (403, 503, 603, 706) est un centre de localisation mobile de passerelle, une fonction de gestion de localisation ou une fonction de récupération de localisation.

12. Composant d'analyse de réseau (402, 502, 601, 700) selon l'une quelconque des revendications 1 à 11, dans lequel les informations de localisation sont des informations de localisation d'un groupe de terminaux mobiles comprenant tous les terminaux mobiles desservis par une ou plusieurs tranches de réseau prédéterminées, comprenant tous les terminaux mobiles utilisant une ou plusieurs applications prédéterminées ou une combinaison de ceux-ci.

13. Composant d'analyse de réseau (402, 502, 601, 700) selon l'une quelconque des revendications 1 à 12, dans lequel l'interface de localisation (702) est configurée pour collecter des informations de localisation supplémentaires dudit un ou desdits plusieurs terminaux mobiles à partir d'un fournisseur d'informations de localisation et l'analyseur de réseau (704) est configuré pour générer les informations d'analyse de réseau demandées en utilisant les informations de localisation collectées et/ou les informations de localisation supplémentaires collectées.

14. Procédé pour fournir des informations d'analyse de réseau comprenant :
la réception d'une demande d'informations d'analyse de réseau à partir d'un composant demandeur (401, 501, 602, 705) ;
la détermination de collecter des informations de localisation d'un ou de plusieurs terminaux mobiles à partir d'un composant de services de localisation (403, 503, 603, 706) pour générer les informations d'analyse de réseau, dans lequel il est déterminé de collecter des informations de localisation dudit un ou desdits plusieurs terminaux mobiles à partir du composant de services de localisation (403, 503, 603, 706) pour générer les informations d'analyse de réseau si la demande comprend une indication selon laquelle les informations d'analyse de réseau doivent être générées avec une granularité plus fine que le niveau de la zone de suivi et le niveau de la cellule radio ;
lorsque le déterminant (703) a déterminé de collecter des informations de localisation dudit un ou desdits plusieurs terminaux mobiles à partir d'un composant de services de localisation (403, 503, 603, 706) pour générer les informations d'analyse de réseau,
la sélection d'un composant de services de localisation (403, 503, 603, 706) ;
la collecte d'informations de localisation dudit un ou desdits plusieurs terminaux mobiles à partir du composant de services de localisation sélectionné (403, 503, 603, 706) ;
la génération des informations d'analyse de réseau demandées en utilisant les informations de localisation collectées ; et
la fourniture des informations d'analyse de réseau générées au composant demandeur (401, 501, 602, 705) via l'interface d'analyse (701).
